# EUROPEAN PATENT APPLICATION

(11) **EP 1 641 152 A1**
(43) Date of publication of application: **29.03.2006**
(21) Application number: 05255604.0
(22) Date of filing: 14.09.2005
(51) Int. Cl.: H04B 10/18

(54) **Equalizer having tunable optical and electronic dispersion compensation**

(30) Priority: 24.09.2004 US 949144
(71) Applicant: LUCENT TECHNOLOGIES INC., Murray Hill, New Jersey 07974-0636 (US)
(72) Inventor: Sethumadhavan, Chandrasekhar, Matawan, New Jersey 07747 (US); Doerr, Christopher Richard, Middletown, New Jersey 07748 (US)
(74) Representative: Sarup, David Alexander

(57) **Abstract**

A method of and apparatus for optical signal dispersion compensation uses tunable optical (ODC) and electronic (EDC) dispersion compensation. The ODC provides significant first-order dispersion compensation, but leaves significant high-order dispersion and transmissivity ripple effects. The EDC is used to provide compensation for the high-order dispersion and transmissivity ripple from the ODC.

## Description

### TECHNICAL FIELD OF THE INVENTION

This invention relates generally to optical and electrical equalization arrangements and, more particularly, to a method and apparatus for implementing an equalizer having tunable optical and electronic chromatic dispersion compensation.

### BACKGROUND OF THE INVENTION

Currently, to transmit over more than 80 km of standard single-mode fiber (SSMF) at 10 Gb/s requires chromatic dispersion compensating fiber (DCF). DCF is expensive, large, lossy, nonlinear, and fixed. The fixed nature is especially problematic for mesh networks in which transmission path-length may vary.

Also, there is a new type of 10-Gb/s optical transceiver that promises to have extremely low cost―the 10-Gb/s pluggable transceiver (XFP). This is a small module (9mmx 18mmx62mm) that can be plugged into a cage on the faceplate of a circuit pack. It contains a low-cost electroabsorption modulated laser (EML), a receiver, and clock and data recovery chips. EMLs cannot use dispersion-tolerant formats such as duobinary and in general have worse transmission performance than their more expensive LiNbO₃-based transmitter counterparts.

Considering the trend for lower cost, smaller footprint, and more flexibility yet transmitters with less dispersion tolerance, there is a strong need for receiver-based compact and adjustable dispersion compensation. Previously, L. D. Garrett, *et. al.,* demonstrated 480 km of 10-Gb/s transmission using tunable optical dispersion compensation from a bulk-optic device (see L. D. Garrett, et. al., OFC 2000, p. 187). However, their dispersion compensator had a small tuning range, so they could not adjust for a large variation in fiber length. Also, they placed the dispersion compensation in the span itself, which is difficult to control with feedback from the receiver. Finally, they used a LiNbO₃-based transmitter.

Thus, there is a continuing need for a compact and adjustable chromatic dispersion compensator.

### SUMMARY OF THE INVENTION

In accordance with the present invention, we disclose a method of and apparatus for dispersion compensation having tunable optical and electronic dispersion compensation (ODC and EDC, respectively). While an ideal ODC can compensate for an unlimited amount of dispersion, practical ODCs have a narrow bandwidth. As a result, while these ODCs provide significant first-order dispersion compensation, they leave significant high-order dispersion and transmissivity ripple effects. It is known that electronic dispersion compensation, EDC, is fundamentally limited in the amount of dispersion compensation they can provide, because of the loss of phase information in the photodetector (A. J. Weiss, et al, IEEE Photon. Technol. Lett., 15 (2003), p. 1225). In accordance with the present invention, we have recognized that an improved performance practical dispersion compensator can be implemented by combining an ODC (for first-order dispersion compensation) with an EDC (for compensating for high-order dispersion and transmissivity ripple effects).

More specifically, in accordance with the present invention, we describe a dispersion compensator comprising
a tunable optical dispersion compensator, ODC, responsive to a first control signal for compensating primarily first-order dispersion in a received optical signal (this ODC may consist of one or more simpler ODCs in series);
an optical signal detector for detecting the ODC compensated received optical signal and for generating an electrical signal;
an adaptive electronic dispersion compensator, EDC, responsive to one or more control signals for compensating higher-order dispersion and/or transmissivity ripple of the electrical signal;
an electrical signal monitor detector for detecting an electrical signal from the EDC and for generating a quality signal that indicates the quality of the received signal; and
a controller responsive to the quality signal for generating the first control signal for controlling first-order dispersion compensation in the ODC and for generating the one or more control signals for controlling higher-order dispersion compensation and/or transmissivity ripple in the EDC so as to reduce overall dispersion in the received optical signal.

In accordance with the present invention, a method of providing optical signal dispersion compensation comprises the steps of:
using a tunable optical dispersion compensator, ODC, compensating primarily for first-order dispersion in a received optical signal;
detecting the compensated received optical signal and generating an electrical signal therefrom;
using adaptive electronic dispersion compensator, EDC , compensating for higher-order dispersion and/or transmissivity ripple of the electrical signal;
detecting an electrical signal from the EDC and for generating a quality signal that indicates the quality of the received signal; and
in response to the quality signal, controlling first-order dispersion compensation in the ODC and controlling higher-order dispersion compensation and/or transmissivity ripple in the EDC so as to reduce overall dispersion in the received optical signal

In another embodiment, we describe an intersymbol interference (ISI) mitigator comprising
a narrow-band tunable ISI optical equalizer, OEQ, responsive to a first control signal for compensating for first-order distortions in a received optical signal;
an optical signal detector for detecting the OEQ compensated received optical signal and for generating an electrical signal;
an adaptive ISI electronic equalizer, EEQ, responsive to a second control signal for equalizing the electrical signal so as to provide higher-order distortions in the received optical signal;
an electrical signal detector for detecting an electrical signal from the EEQ and for generating a quality signal that indicates the quality of the received signal; and
a controller responsive to the quality signal for generating the first control signal for controlling first-order distortion compensation in the OEQ and for generating the second control signal for controlling higher-order distortion compensation in the EEQ so as to reduce overall distortion in the received optical signal.

### BRIEF DESCRIPTION OF THE DRAWINGS

The present invention will be more fully appreciated by consideration of the following Detailed Description, which should be read in light of the accompanying drawing in which:
Fig. 1 shows an illustrative block diagram of our dispersion compensator in accordance with the present invention.
Figs. 2A and 2B illustrate the use of our dispersion compensator, respectively, at receiver and transmitter receiver locations of an optical system.
Figs. 3A - 3C show, illustratively, the dispersion characteristics of the optical transmission line, the dispersion characteristics of the ODC, and the remaining dispersion out of the ODC, respectively.
Fig. 4 illustratively shows the transmissivity characteristics of an optical signal received by a dispersion compensator.
Fig. 5 shows an illustrative experimental optical system, which uses our dispersion compensator at the receiver location.
Fig. 6 shows an illustrative ODC implemented using a Mach-Zhender interferometer-based tunable dispersion compensator.
Fig. 7 shows the improvement in bit error ratio for a 427km span using our dispersion compensator.
Fig. 8 shows an illustrative block diagram of an intersymbol interference (ISI) mitigator in accordance with the present invention.

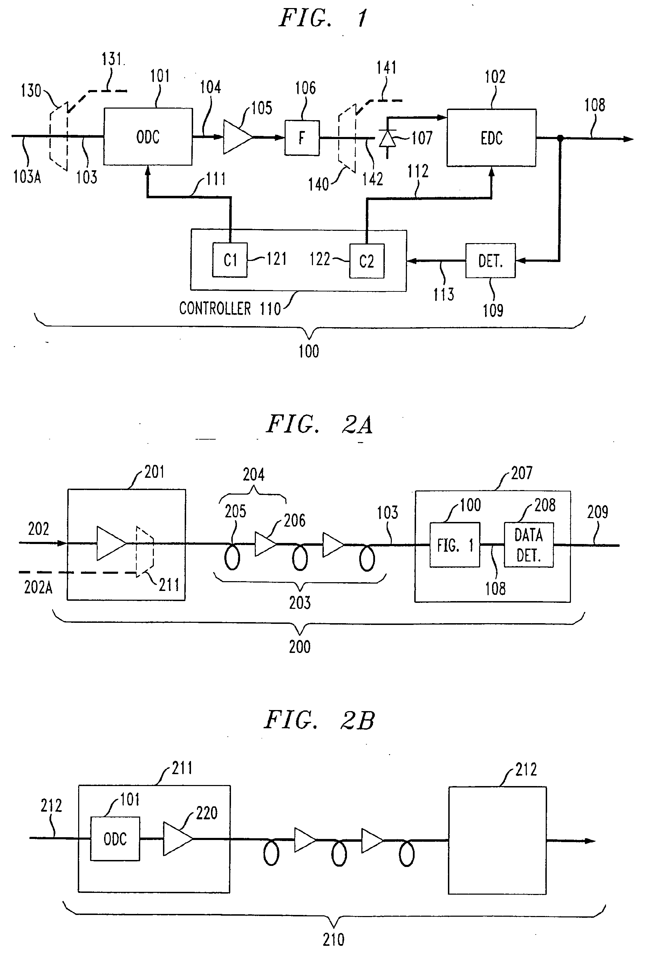

In the following description, identical element designations in different figures represent identical elements. Additionally in the element designations, the first digit refers to the figure in which that element is first located (e.g., 101 is first located in Fig. 1).

### DETAILED DESCRIPTION

Shown in Fig. 1 is an illustrative block diagram of our dispersion compensator 100 including adjustable (or tunable) Optical Dispersion Compensator (ODC) 101 and adjustable Electrical Dispersion Compensator (EDC) 102 for providing dispersion equalization of a received optical signal 103. With reference to Fig. 2A, our dispersion compensator 100 may be illustratively part of a receiver unit 207 of an optical communication system 200. In such a system, a data modulated optical signal 202 is amplified and transmitted by optical transmitter 201 over an optical facility 203 to a receiver unit 207. The optical facility 203 is typically an optical fiber that may or may not include a segment of dispersion compensating fiber (DCF). The optical facility 203 may include one or more optical links 204 including an optical repeater 206 and optical fiber 205. As a result of transmission over optical facility 203, the modulated optical signal experiences optical dispersion, transmission ripple and other intersysmbol interference. At the receiver unit 207, our adjustable dispersion compensator 100 receives the optical signal 103 from optical facility 203 and equalizes the dispersion in the received optical signal 103. The resulting equalized signal is an electrical signal 108 that is outputted from adjustable dispersion compensator 100 and processed by a data receiver 208 to recover the data signal 209.

Returning to Fig. 1, our dispersion compensator 100 includes an adjustable Optical Dispersion Compensator (ODC) 101, an optical preamplifier 105, and a filter 106 for reducing the amplified spontaneous emission. The filter is optional. Also, the order of the components 101, 105, and 106 may be varied, as long as the filter comes after the optical amplifier. Adjustable ODC 101 provides an amount of primarily first order dispersion compensation that is controllable by at least a first control signal 111 from controller 110. The adjustable ODC 101 may be implemented using one or more ODC elements. As will be discussed in a later paragraph, control unit 121 uses a first control signal 111 to control adjustable ODC 101 to compensate for primarily first-order dispersion in a received optical signal 103. Each ODC element may be implemented using a variety of well-known tunable dispersion equalizers (also referred to as tunable dispersion compensators - TDCs) including (1) Sampled chirped fiber Bragg grating (see J. X. Cai et al, IEEE Photon Technol. Lett. 9, 1455, 1990); (2) Virtually imaged phase array (see M. Shiraski. IEEE Photon Technol. Lett. 9, 1598, 1997); (3) Gires-Tournois etalons (see C. K. Madsen and J. H. Zhao, John Wiley & Sons, 1999, D. J. Moss, et al., OFC, 2002); (4) Ring resonators (see C. K. Madsen, IEEE Photon Technol. Lett. 11, 1623, 1999); (5) Waveguide gratings (see C. R. Doerr, et al., IEEE Photon Technol. Lett. 5, 1258, 2003); Mach-Zehnder interferometers (MZIs) (see K. Tagiguchi, et al., IEEE JSTQE 2, 270, 1996); and (6) Deformable mirrors (see D. Nelson, et al., OFC PD29, 2003). The circuits and operating description of these well-known tunable dispersion equalizers are hereby incorporated by reference herein. It is convenient if the ODC is colorless, but this is not a requirement.

Returning to Fig. 1, the output of filter 106 is detected by detector 107 and the resulting demodulated electrical signal is coupled to adjustable EDC 102 for electrical dispersion compensation. Adaptive EDC 102 is adjustable under control of one or more second control signals 112 from controller 110 to compensate for higher-order dispersion and/or optical transmissivity ripple (which could be caused by the ODC) effects. The resulting compensated electrical signal 108 from EDC 102 is then coupled to a data detector (as shown by 208 in Fig. 2A) or other circuits. The EDC 102 may include one or more EDC elements. Each EDC element may be implemented as (1) an adaptive multi-tap feed-forward equalizer using an eye-signal monitor (as signal detector 109) circuit to detect the quality of the demodulated electrical signal (see J. H. Winters and R. Gitlin, IEEE Trans.); (2) an adaptive feed-forward equalizer using a decision-feedback circuit (as signal detector 109) to detect the quality of the demodulated electrical signal (see J. H. Winters and R. Gitlin, IEEE Trans.); (3) a multi-threshold equalization with feedback from the forward-error correcting (FEC) circuit (as signal detector 109) to detect the quality of the demodulated electrical signal (see A. Fabert, et. al., "Performance of a 10.7 Gb/s receiver with digital equaliser using maximum likelihood sequence estimation," paper Th4.1.5, ECOC 2004); or (4) a maximum likelihood sequence estimator. As will be discussed in a later paragraph, control unit 122 uses second control signal 111 to control EDC 102 to compensate for higher-order dispersion and/or optical transmissivity ripple effects in the received optical signal. According to another feature of our invention, EDC 102 can be controlled to also compensate for first-order dispersion in a received optical signal 103. The circuits and operating description of these well-known adaptable EDCs are hereby incorporated by reference herein.

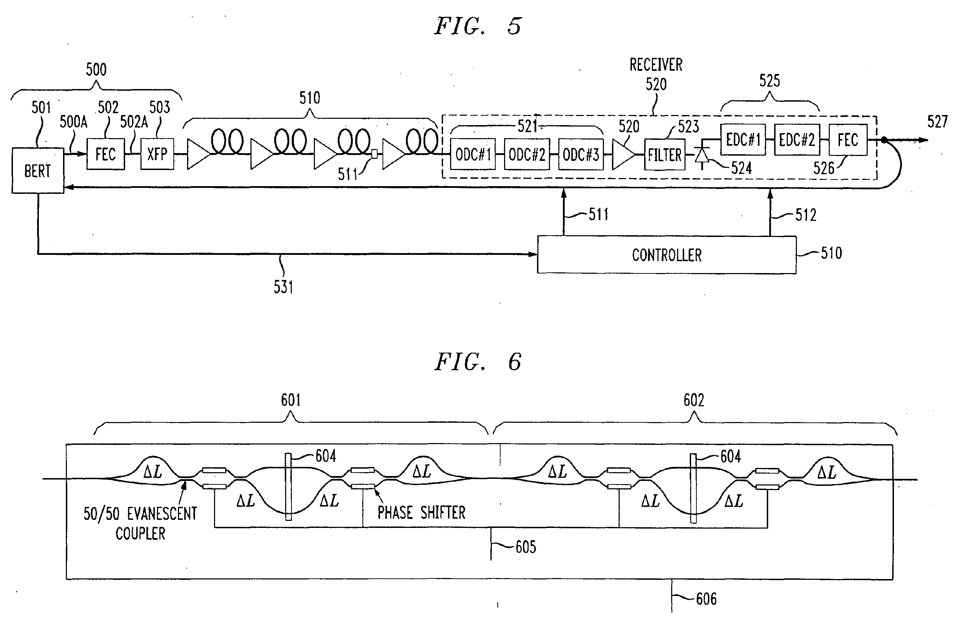

As shown in Fig. 1, the compensated electrical signal 108 from EDC 102 is also coupled to signal quality detector 109, which detects the signal to generate an electrical signal 113 indicative of the quality of the compensated electrical signal 108. The signal detector 109 may be any of a variety of well-known electrical signal detectors including (1) an error detection or error correction circuit for detecting the bit-error rate in a data signal including parity bits or error correcting bits, respectively, (discussed with reference to Fig. 5), (2) an eye monitor circuit for detecting an eye opening in the electrical signal from the EDC, (3) a mean square error detector for detecting the mean square error in the electrical signal from the EDC, or (4) an electrical signal spectrum monitor for detecting anomalies in the electrical spectrum of the electrical signal from the EDC 102 (see M. Bohn, et al., ECOC 2003, Th2. 2.4). Again, the circuits and operating description of these well-known signal quality detectors are hereby incorporated by reference herein.

The electrical quality signal 113 from signal detector 109 is coupled to controller 110. The controller 110 operates in a well-known manner to utilize characteristics of the electrical quality signal 113 to enable control units 121 and 122, respectively, to separately and independently control ODC 101 and EDC 102. Thus, the control loop through units 101, 105, 106, 107, 102, 109,121 enable control unit 121 to control the adjustment (or tunability) of ODC 101 independent of the operation of EDC 102. In this manner, control unit 121 uses first control signal 111 to control ODC 101 to compensate for primarily first-order dispersion in a received optical signal 103. Similarly, the control loop through units 101, 105, 106, 107, 102, 109, 122 enable control unit 122 to control the adaptability of EDC 102 independent of the operation of ODC 101. In this manner, control unit 122 uses second control signal 111 to control EDC 102 to compensate for higher-order dispersion and/or transmissivity ripple of the received optical signal. Controller 110 can control the operation of ODC 101 and EDC 102 in an iterative manner, first adjusting ODC 101 and then adjusting EDC 102 and then readjusting ODC 101 and EDC 102, etc. Alternatively, since the adaptability of EDC 102 is usually much faster than the adjustability of ODC 101, controller 110 can signal ODC 101 to adjust and let EDC 102 free run and automatically readjust in response to each ODC 101 readjustment. Thus, controller 110 would store the quality level of electrical quality signal 113 and send adjustment control signal 111 to ODC 101 and determine if the quality level of electrical quality signal 113 has increased or decreased over the previously stored quality level. If quality has increased, .controller 110 would continue to send an adjustment control signal 111 to ODC 101 to attempt to further improve the quality. If quality level has decreased, controller 110 would change the direction of the adjustment control signal 111 sent to ODC 101 in an attempt to improve the quality level. Since EDC 102 has a faster response time than ODC 101, controller 110 first sends a control signal 111 to ODC 101 and then sends a control signal 112 to EDC 102. Moreover, if EDC 102 can automatically retune itself, controller may not need to send control signal 112 to EDC 102. In this manner, our dispersion equalization occurs in an iterative manner, whereby controller 110 first enables ODC 101 to provide first order optical dispersion compensation and then enables EDC 102 to provide higher-order dispersion and/or transmissivity ripple compensation. This procedure continues in this iterative manner until the controller 110 determines that the quality of the electrical signal 113 has been optimize or has reached a desired or acceptable level.

Our invention may be used in a wavelength-division multiplexed (WDM) system. Such a system, would include either be a demultiplexer 130 connected in front of ODC 101 which demultiplexes the received WDM optical signal 103A into separate channels, e.g., 103 and 131, or a demultiplexer 130 connected between ODC 101 and optical signal detector 107, which demultiplexes the WDM optical signal 104 into separate channels 141 and 142. In the latter case, ODC 101 would need to be colorless, in that it can operate on multiple channels 301, 311, 321 simultaneously. Also, in this latter case, the electrical quality signal 113 from only one channel would be used by controller 110 to control ODC 101. Additionally as shown in Fig. 2A, such a WDM system, would include multiple data signals 202 (202A, etc.) which are multiplexed together in multiplexer 211 to form the WDM optical signal utilized in the WDM system.

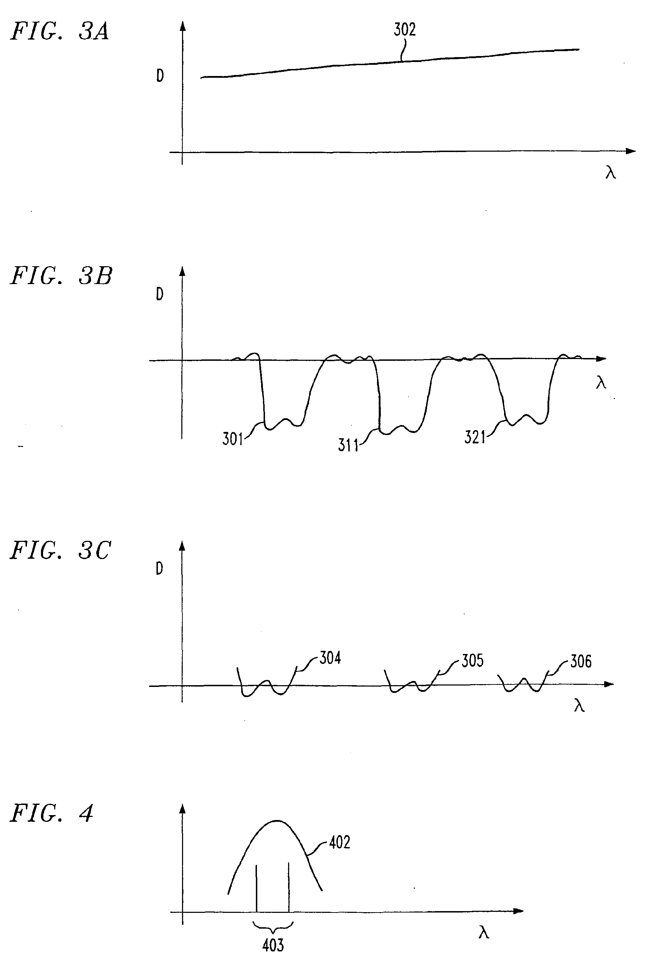

With reference to Figs. 3A we show, illustratively, the dispersion of the optical transmission line 302. In Fig. 3B we show, illustratively, the dispersion characteristics 301 of ODC 101 for a single wavelength channel received optical signal 103 and the dispersion characteristics 301, 311, and 321 for the plurality of wavelength channels of a received WDM type signal 103. Shown by 304 in Fig. 3C, the remaining or left-over dispersion of for a single wavelength channel optical signal 104 out of ODC 101 is a 2^{nd} and higher order dispersion (305 and 306 show the remaining 2^{nd} and higher order dispersion for the other channels of a WDM type signal 103). In actuality, after the first iterative go around (ODC 101 and EDC 102 adjustments) the first order dispersion may be above or below the zero level. The remaining dispersion in 304 is essentially the remaining 2^{nd} and higher order dispersion, which is compensated for by EDC 102. As noted earlier EDC 102 can also be used to compensate for a limited amount of first order dispersion in addition to the 2^{nd} and higher order dispersion and/or transmissivity ripple.

Shown in Fig. 4, 402, is a diagram showing, illustratively, transmissivity characteristics of the ODC. This transmissivity characteristic having a non-linear or second-order component. As discussed earlier EDC 102 may be used to compensate for this transmissivity ripple.

With reference to Fig. 2B, the ODC 101 of our dispersion compensator 100 may also be utilized as part of a transmitter unit 211 of an optical communication system 210. In such a system, a data modulated optical signal 212 is pre-dispersion compensated by ODC 101 and then amplified by amplifier 220 and transmitted over an optical facility 203 to a receiver unit 207.

### Experimental Optical System

With reference to Fig. 5 there is shown an experimental optical communication system that demonstrates the effectiveness of our dispersion compensator apparatus. The system is essentially a specific embodiment of the system of Fig. 2A and includes a transmitter 500, an optical facility or span 510, and a receiver 520. At the transmitter location 500, the input modulated data signal 500A is a 2¹¹-1 pseudo-random bit sequence at 9.95 Gb/s from a bit-error rate tester (BERT) 501. The input modulated data signal 500A is coded with forward-error correction bits by enhanced forward-error correction (FEC) unit 502. The system uses a FEC decoder 526 to decode these coded FEC bits and uses the bit-error rate signal from the FEC as a quality signal that indicates the quality of the received optical signal.

The output of FEC unit 502 is a 10.66 Gb/s signal (data + overhead bits for FEC), which drives a transmitter of an intermediate reach 10-Gb/s pluggable transceiver (XFP) 503. Transceiver XFP 503, illustratively, operates at a wavelength of 1549.315 nm (193.5 THz). The XFP 503 extinction ratio was 10.4 dB (note extinction ratio was not sacrificed to improve dispersion tolerance). The XFP 503 output is launched into an optical facility or span 510 which consisted either of 0 km of fiber or 427 km of fiber. This simulates a situation in a mesh network in which a node receives a signal that is transmitted either from a near node or a far node, depending on the network configuration. The launch power from into each span is -2 dBm. There is an optical filter 511 in the third span to keep the 1530-nm amplified spontaneous emission peak from increasing too much. The optical signal-to-noise ratio (OSNR) at the end of the 427 km span 510 was 20 dB.

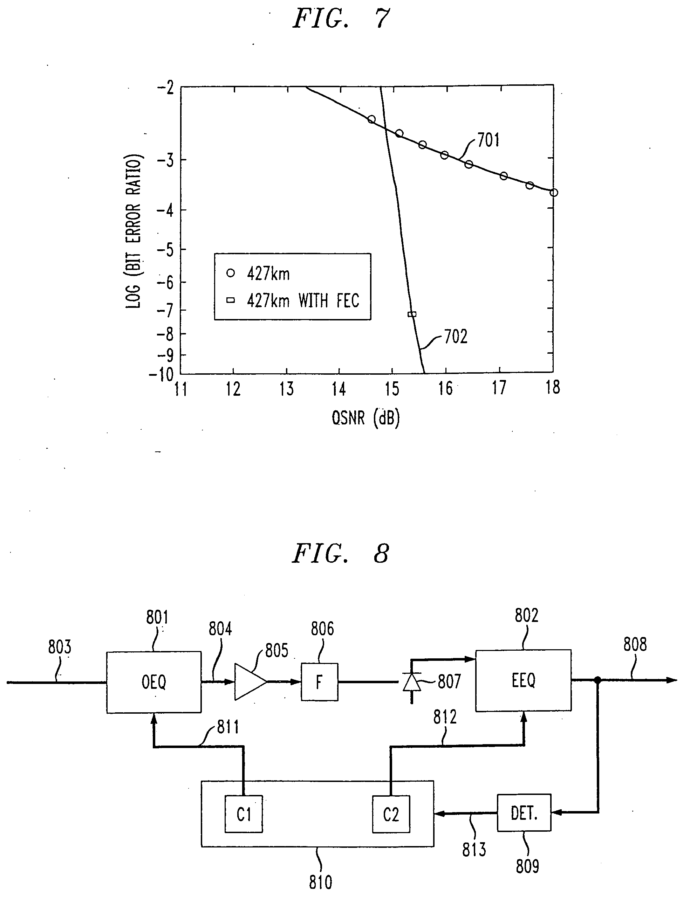

The receiver 520 consists of an ODC 521 stage including three ODCs in series, a preamplifier 522, a filter 523, a photodiode detector 524, an EDC stage 525 including two EDCs in series, and an FEC decoder 526. The three ODCs 521 are silica-waveguide Mach-Zehnder-inteferometer (MZI)-based tunable dispersion compensators (TDCs). Three ODCs are needed to accommodate for the large dispersion introduced in span 510. The ODC#1 and ODC#2 each consist of two three-stage MZI TDCs (see Fig. 6, 601 - 602) integrated on the same chip and have a free-spectral range (FSR) of 50 GHz. The third ODC#3 is one three-stage MZI TDC with an FSR of 25 GHz. The three ODCs are illustratively shown in Fig. 6 and operate in the manner described in C. R. Doerr, et al., IEEE Photon. Technol. Lett. 16 (2004), p. 1340. The first two ODCs and the third ODC have dispersion adjustment ranges of ~±1700 ps/nm and ~±2000 ps/nm, respectively. Because the ITU (International Telecommunication Union) channel spacing is an integer multiple of the ODC FSRs, the ODCs 521 can compensate any channel on the ITU grid. All the ODCs of Fig. 6 use half-wave plates 604 to make them polarization independent. All the path-length differences in the MZIs were post-fabrication permanently trimmed using hyperheating. Each ODC requires only one dispersion control voltage 605 and one chip temperature control 606 (for aligning the wavelength band of the ODC with that of the received optical signal). The insertion loss of each ODC is ~5 dB. Although the three ODCs are in separate packages, they could all be integrated onto a single chip, reducing the size and insertion loss.

In EDC unit 525, EDC #1 has adaptive multi-tap feed-forward equalization (see J. H. Winters and R. Gitlin, IEEE Trans.) with eye-monitoring feedback, and EDC #2 has adaptive feed-forward equalization, decision-feedback equalization (see J. H. Winters and R. Gitlin, IEEE Trans.) and multi-threshold equalization with feedback from the FEC 526 (see P. J. Winser, et al., OFC 2004, PDP7). The output electrical signal from EDC #2 is a modulated signal (with data + FEC bits), which is outputted to FEC 526. The FEC 526 corrects for any data errors and outputs the corrected data signal 527. The data signal 527 is also connected BERT 501, which determine the number of bit errors in the corrected data signal 527. This measured bit error rate is a measure of the quality of data transmission over the experimental system.

Figure 7 shows the measured bit-error rates vs. OSNR (optical signal to noise ratio) when the optical span 510 was 427 km of standard single-mode fiber. We measured the dispersion of the 427-km span at 1549 nm to be 7200 ps/nm. The ODCs 521 were tuned manually, and the EDCs 525 tuned themselves automatically. As shown, the path-penalty 701 for 427 km is 3.8 dB when FEC 526 is enabled. As shown the bit error ratio improves dramatically for all OSNR greater than 15 dB.

Note, the experimental system of Fig. 5 can be readily adapted to a more typical optical communication system. For such an optical communication system, the input modulated data signal 500A would come from a data source and the bit-error rate from FEC would be used as the detector 109 of the dispersion compensator 100 of Fig. 1. In such a system receiver unit 520 would be the dispersion compensator 100 of Fig. 1. A bit error rate signal would serve as the quality electrical signal 531 from the FEC, which would be used by controller unit 510 to generate the control signals 511 and 512 to control the ODC 521 and EDC 525 units, in the same manner as described in Fig. 1. It should be noted that the system of Fig. 5, the FEC 502 and FEC 526 can be replaced by other parity bit circuits so that the modulated data signal 502A could be a data signal with error detection parity bits rather than error correction bits. In such a system the quality signal 531 would be the bit-error rate of the received data signal 527.

Figure 8 shows an illustrative block diagram of an intersymbol interference (ISI) mitigator in accordance with the present invention. The intersymbol interference (ISI) mitigator 800 is implemented in a similar manner to the dispersion compensator 100 of Fig. 1 and operates in a similar manner. The ISI mitigator 800 however, would likely only be used at a receiver location (see Fig. 2A). The ISI mitigator includes a narrow-band tunable ISI optical equalizer (OEQ) 801 (in place of the ODC 101 of Fig. 1) (see C. R. Doerr, et. al., Journal of Lightwave Technology, vol. 22, pp. 249-256, Jan. 2004) and an adaptive ISI electronic equalizer (EEQ) 802 (in place of the EDC 102 of Fig. 1) (see J. H. Winters and R. Gitlin, IEEE Trans.). Thus essentially ISI mitigator 800 comprises a narrow-band tunable ISI optical equalizer (OEQ) 801, which is responsive to a first control signal 811 for compensating for first-order distortions in a received optical signal 803. After amplification 805 and filtering 806, an optical signal detector 807 detects the OEQ 801 compensated received optical signal and generates an electrical signal 807A. The order of 801, 805, 806 could be changed, as long as filter 806 is after amplifier 805. Filter 806 could be omitted altogether if the out-of-band amplified spontaneous emission is not significant). An adaptive ISI electronic equalizer (EEQ) 802, is responsive to a second control signal 812 for equalizing the electrical signal 807A so as to compensate for higher-order distortions in the received optical signal 803. An electrical signal detector 809 detects an electrical signal from the EEQ 802 and generates a quality signal 813 that indicates the quality of the received signal 808. A controller 800 is responsive to the quality signal 813 for generating the first control signal 811 for controlling first-order distortion compensation in the OEQ 801 and for generating the second control signal 812 for controlling higher-order distortion compensation in the EEQ 802 so as to reduce overall distortion in the received optical signal 808.

Various modifications of our invention will occur to those skilled in the art. Nevertheless all deviations from the specific teachings of this specification that basically rely upon the principles and their equivalents through which the art has been advanced are properly considered within the scope of the invention as described and claimed.

## Claims

1. A dispersion compensator comprising
a tunable optical dispersion compensator, ODC, responsive to a first control signal for compensating primarily first-order optical dispersion in a received optical signal;
an optical signal detector for detecting the ODC compensated received optical signal and for generating an electrical signal;
an adaptive electronic dispersion compensator, EDC, responsive to one or more control signals for compensating higher-order optical dispersion and/or optical transmissivity ripple effects in the electrical signal;
an electrical signal detector for detecting an electrical signal from the EDC and for generating a quality signal that indicates the quality of the received signal; and
a controller responsive to the quality signal for generating the first control signal for controlling first-order dispersion compensation by the ODC and for generating the one or more control signals for controlling higher-order dispersion compensation and/or transmissivity ripple by the EDC so as to reduce overall dispersion in the received optical signal.

2. The dispersion compensator of claim 1 wherein the received optical signal has a plurality of wavelength channels, the dispersion compensator further including a demultiplexer connected between the ODC and optical signal detector and wherein the optical signal detector receives one of a plurality of ODC compensated wavelength channels from the ODC.

3. The dispersion compensator of claim 1 wherein the EDC also provides some first order dispersion compensation.

4. The dispersion compensator of claim 1 wherein the quality signal is related to the bit-error rate as calculated from an error detection or error correction circuit.

5. The dispersion compensator of claim 1 wherein the electrical signal detector is one selected from a group of signals including
a. an error detection or error correction circuit for detecting the bit-error rate in the electrical signal from the EDC,
b. an eye monitor circuit for detecting an eye opening in the electrical signal from the EDC,
c. a mean square error detector for detecting the mean square error in the electrical signal from the EDC, and
d. an anomaly electrical signal detector for detecting anomalies in the electrical spectrum of the electrical signal from the EDC.

6. The dispersion compensator of claim 1 wherein the ODC is selected from a group including
(a) Sampled chirped fiber Bragg grating,
(b) Virtually imaged phase array,
(c) Gires-Tournois etalons,
(d) Ring resonators,
(e) Waveguide gratings,
(f) Mach-Zehnder interferometers (MZIs), and
(g) Gratings combined with deformable mirrors.

7. The dispersion compensator of claim 1 where the EDC is selected from a goup including
(a) an adaptive multi-tap feed-forward equalizer using an eye-signal monitor circuit to detect the quality of the demodulated electrical signal,
(b) an adaptive feed-forward equalizer using a decision-feedback circuit to detect the quality of the demodulated electrical signal,
(c) a multi-threshold equalization with feedback from the forward-error correcting (FEC) circuit to detect the quality of the demodulated electrical signal, and.
(d) a maximum likelihood sequence estimator.

8. The dispersion compensator of claim 1 being part of a receiver of an optical communication system.

9. An intersymbol interference (ISI) mitigator comprising
a narrow-band tunable ISI optical equalizer, OEQ, responsive to a first control signal for compensating for first-order distortions in a received optical signal;
an optical signal detector for detecting the OEQ compensated received optical signal and for generating an electrical signal;
an adaptive ISI electronic equalizer, EEQ, responsive to a second control signal for equalizing the electrical signal so as to compensate for higher-order distortions in the received optical signal;
an electrical signal detector for detecting an electrical signal from the EEQ and for generating a quality signal that indicates the quality of the received signal; and
a controller responsive to the quality signal for generating the first control signal for controlling first-order distortion compensation in the OEQ and for generating the second control signal for controlling higher-order distortion compensation in the EEQ so as to reduce overall distortion in the received optical signal.

10. A method of providing optical signal dispersion compensation, the method comprising the steps of:
using a tunable optical dispersion compensator, ODC, compensating primarily for first-order dispersion in a received optical signal;
detecting the compensated received optical signal and generating an electrical signal therefrom;
using adaptive electronic dispersion compensator, EDC, compensating for higher-order optical dispersion and/or optical transmissivity ripple effects in the electrical signal;
detecting an electrical signal from the EDC and for generating a quality signal that indicates the quality of the received signal; and
in response to the quality signal, controlling first-order dispersion compensation by the ODC and controlling higher-order dispersion compensation and/or transmissivity ripple by the EDC so as to reduce overall dispersion in the received optical signal.
